# EUROPÄISCHE PATENTSCHRIFT

(11) **EP 0 652 387 B1**
(45) Veröffentlichungstag und Bekanntmachung des Hinweises auf die Patenterteilung: **13.10.1999**
(21) Anmeldenummer: 94117323.9
(22) Anmeldetag: 03.11.1994
(51) Int. Cl.: F16D 65/56

(54) **Bremsbacken-Nachstellvorrichtung**
Brake shoe adjusting device
Dispositif de réglage pour patins de frein

(30) Priorität: 06.11.1993 DE 4337954
(43) Veröffentlichungstag der Anmeldung: 10.05.1995
(73) Patentinhaber: BPW FAHRZEUGTECHNIK GmbH & CO. KG, 33104 Paderborn (DE)
(72) Erfinder: Mannstein, Gerhard, D-33104 Paderborn (DE); Müller, Heinrich, D-33161 Hövelhof (DE)
(74) Vertreter: Stenger, Watzke & Ring Patentanwälte

(56) Entgegenhaltungen:
- DE-C- 890 166
- FR-A- 696 182
- FR-A- 866 236
- US-A- 1 824 552
- US-A- 3 111 200
- US-A- 3 425 521

## Beschreibung

Die Erfindung betrifft eine Vorrichtung zum Nachstellen der Bremsbacken einer Innenbackenbremse mit einer sich an einem Festpunkt einer Bremsträgerplatte abstützenden und auf die Primärbacke wirkenden Spreizvorrichtung, wobei die Primärbacke mit der Sekundärbacke über eine schwimmende Nachstelleinrichtung verbunden ist, deren Abstand zwischen ihren Anlageflächen an den Bremsbacken zum Ausgleich des Bremsbelagverschleisses vergrößerbar ist.

Innenbackenbremsen mit Bremsbacken Bremsbacken-Nachstellvorrichtung der voranstehend beschriebenen Art sind beispielsweise aus den DE-OS 30 24 566 und 30 29 504 bekannt. Diese bekannten Konstruktionen haben jedoch den Nachteil eines sehr hohen und störanfälligen Bauaufwandes, so daß sie keinen Eingang in die Praxis gefunden haben. Weitere Beispiele sind in den Dokumenten US-3 111 200 und FR-696 182 beschrieben.

Der Erfindung liegt die **Aufgabe** zugrunde, eine Bremsbacken-Nachstellvorrichtung der eingangs beschriebenen Art derart weiterzubilden, daß sich bei geringem Bauaufwand eine praxisgerechte und funktionssichere Konstruktion ergibt.

Gelöst wird diese Aufgabenstellung durch die Merkmale des Anspruch 1, wobei der sich aufgrund des Bremsbelagverschleisses vergrößernde Zuspannweg der Primärbacke bei deren Rückhub als Antrieb zur Vergrößerung des Abstandes der Anlageflächen der Nachstelleinrichtung dient.

Gemäß einem weiteren Merkmal der Erfindung ist der Rückhub der Primärbacke über einen auf der Bremsträgerplatte verschwenkbar gelagerten Nachstellhebel auf ein Nachstellrad übertragbar, das auf einer Gewindespindel mit gegenläufigen Gewindeabschnitten angeordnet ist, die jeweils mit einer eine Anlagefläche für eine der Backen enthaltenden Spindelmutter zusammenwirken.

Um die Spindelmutter gegen Verdrehen zu sichern, wird erfindungsgemäß jede Anlagefläche innerhalb einer am Ende jeweils einer Backe angreifenden Nut in der Spindelmutter ausgebildet.

Mit diesem erfindungsgemäßen Vorschlag wird eine Nachstellvorrichtung geschaffen, die mit nur wenigen Bauteilen auskommt und auch unter den rauhen Praxisbedingungen funktionssicher ist.

Das Nachstellrad der erfindungsgemäßen Vorrichtung wird gemäß einem weiteren Merkmal der Erfindung als Klinkenrad ausgeführt, das jeweils bei Uberschreiten der Klinkenteilung beim Rückhub der Primärbacke durch den durch eine Rückholfeder belasteten Nachstellhebel um eine Teilung verdreht wird.

Auf der Zeichnung ist ein Ausführungsbeispiel einer Innenbackenbremse mit einer erfindungsgemäßen Bremsbacken-Nachstellvorrichtung dargestellt, und zwar zeigen:
- Fig. 1: eine Ansicht einer Bremsträgerplatte einer Innenbackenbremse mit den beiden Backen und deren zugleich als Nachstelleinrichtung ausgebildeten Bremsbackenabstützung,
- Fig. 2: eine in der oberen Hälfte geschnittene Ansicht der Bremsbackenabstützung gemäß Fig. 1,
- Fig. 3: einen Teilschnitt gemäß der Schnittlinie III-III in Fig. 1,
- Fig. 4: einen weiteren Teilschnitt gemäß der Schnittlinie IV-IV in Fig. 1 in der Normalstellung und
- Fig. 5: einen der Fig. 4 entsprechenden Schnitt, bei dem der Nachstellhebel arretiert ist.

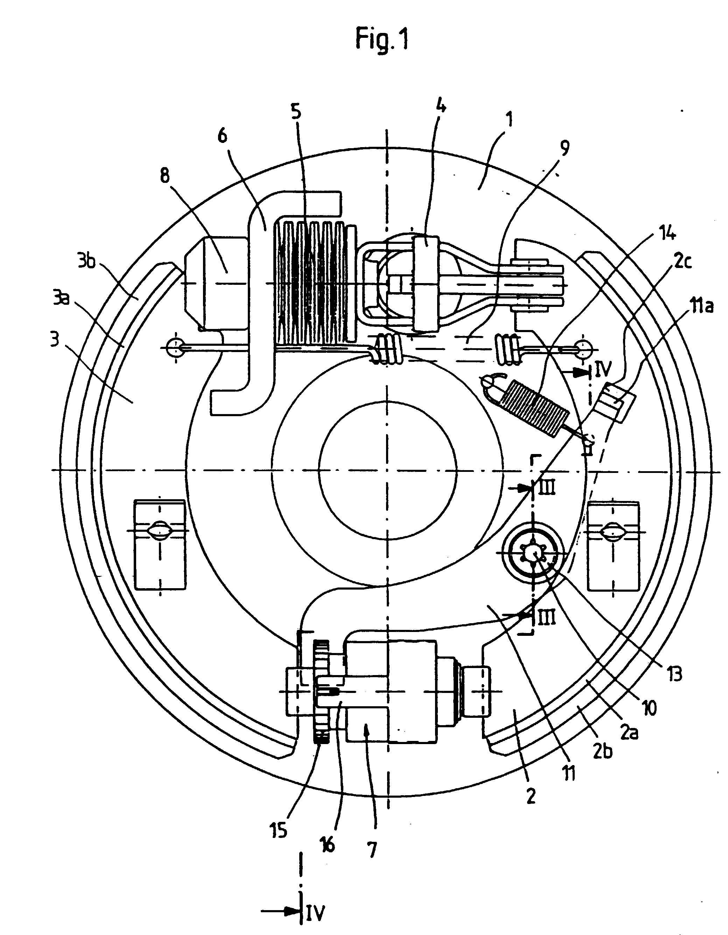

Die ohne die zugehörige Bremstrommel in Fig. 1 dargestellte Innenbackenbremse umfaßt eine Bremsträgerplatte 1, auf der zwei Bremsbacken, nämlich eine Primärbacke 2 und eine Sekundärbacke 3 angeordnet sind. Jede dieser Bremsbacken hat einen Bremsbelagträger 2a bzw. 3a, auf dem jeweils ein Bremsbelag 2b bzw. 3b auswechselbar befestigt ist.

Die Betätigung der beiden Bremsbacken erfolgt mit Hilfe einer Spreizvorrichtung 4, die beim Ausführungsbeispiel als sogenanntes Spreizgelenkschloß ausgebildet ist und sich mit einem Ende über ein Federpaket 5 an einem als Festpunkt dienenden Stützbock 6 an der Bremsträgerplatte 1 abstützt. Das andere Ende der Spreizvorrichtung 4 ist mit dem bei Vorwärtsfahrt des Fahrzeuges in Drehrichtung vornliegenden Ende der Primärbacke 2 verbunden.

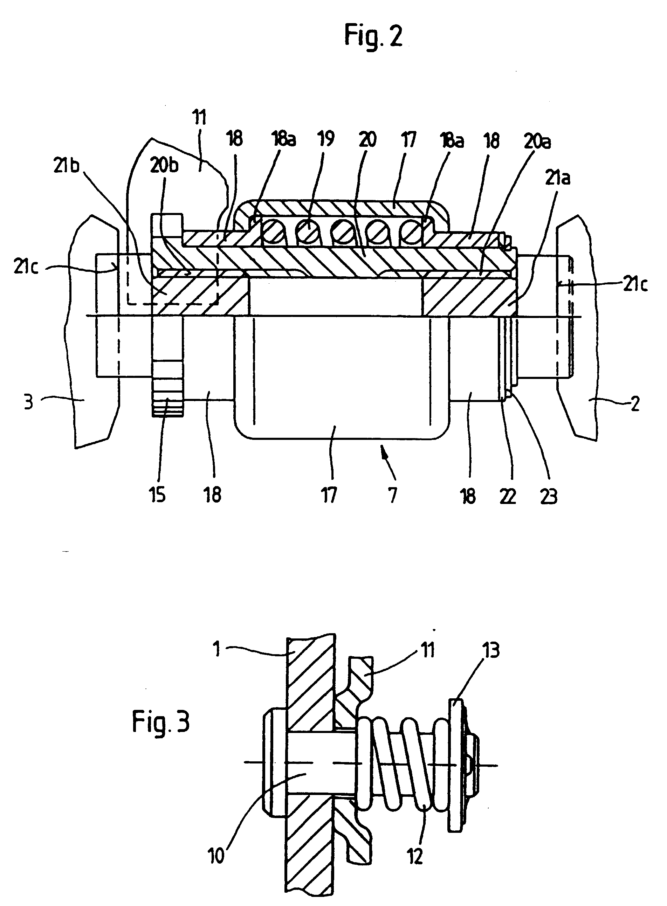

Das andere Ende der Primärbacke 2 stützt sich an einer Bremsbackenabstützung 7 ab, die vergrößert in Fig. 2 dargestellt ist. Diese Bremsbackenabstützung 7 überträgt die von der Spreizvorrichtung 4 auf die Primärbacke 2 ausgeübte Kraft zu einem Teil auf das benachbarte Ende der Sekundärbacke 3, die mit ihrem anderen Ende über ein Lagerstück 8 an dem als Festpunkt dienenden Stützbock 6 abgestützt ist. Zwischen den beiden von der Bremsbackenabstützung 7 entfernt liegenden Enden der Bremsbacken ist eine Zugfeder 9 angeordnet, die nach Lösen der Bremse die Backen in ihre Ausgangsstellung zurückzieht.

Bei dem auf der Zeichnung dargestellten Ausführungsbeispiel ist die Bremsbackenabstützung 7 zugleich als Nachstelleinrichtung ausgebildet, um den durch Verschleiß der Bremsbeläge 2b und 3b sich vergrößernden Zustellweg der Bremsbacken durch Nachstellung selbsttätig zu verringern. Hierbei wird der sich aufgrund des Bremsbelagverschleisses vergrößernde Zuspannweg der Primärbacke 2 als Antrieb benutzt, um den Abstand der Anlageflächen der beiden Bremsbacken an der Bremsbackenabstützung 7 zu vergrößern.

Zu diesem Zweck ist auf einem an der Bremsträgerplatte 1 angeordneten Lagerbolzen 10 ein Nachstellhebel 11 verschwenkbar gelagert. Einzelheiten dieser Lagerung sind aus Fig. 3 ersichtlich. Diese Darstellung zeigt, daß der Nachstellhebel 11 mit gewissem Spiel auf dem Lagerbolzen 10 angeordnet und durch eine Druckfeder 12 belastet ist, die sich mit ihrem anderen Ende an einer auf dem Lagerbolzen 10 befestigten Lagerscheibe 13 abstützt. Auf diese Weise erhält der Nachstellhebel 11 zusätzlich zu seiner schwenkbaren Lagerung um die Längsachse des Lagerbolzens 10 eine begrenzte Beweglichkeit in Achsrichtung des Lagerbolzens 10.

Der Nachstellhebel 11 greift mit einer Abwinklung lla in einen fensterartigen Ausschnitt 2c der Primärbacke 2 ein, so daß der Nachstellhebel 11 bei jeder Zustellbewegung der Primärbacke 2 gemäß Fig. 1 in Uhrzeigerrichtung auf dem Lagerbolzen 10 verschwenkt wird. Die Verschwenkung geschieht hierbei entgegen der Kraft einer Rückholfeder 14.

Das andere Ende des Nachstellhebels 11 wirkt mit einem Nachstellrad 15 zusammen, das beim Ausführungsbeispiel als Klinkenrad ausgebildet ist und durch eine Blattfeder 16 gegen unerwünschtes Verdrehen gesichert ist. Sobald der Rückhub des Nachstellhebels 11 die Klinkenteilung des Nachstellrades 15 übersteigt, wird das Nachstellrad 15 unter Uberwinden der Federkraft der Blattfeder 16 um eine Teilung verdreht. Die Wirkung dieser Verdrehung wird anschließend anhand der Fig. 2 erläutert.

Diese Darstellung in Fig. 2 zeigt ein auf der Bremsträgerplatte 1 befestigtes Gehäuse 17, in dem zwei Buchsen 18 axialbeweglich angeordnet sind. Die im Gehäuse 17 liegenden Enden der beiden Buchsen 18 sind jeweils mit einem als Anschlag für das Gehäuse 17 ausgebildeten Ringflansch 18a versehen. Zwischen diesen Ringflanschen 18a befindet sich eine Druckfeder 19, die im Normalfall dafür sorgt, daß die Buchsen 18 bis zur Anlage ihrer Ringflansche 18a im Inneren des Gehäuses 17 aus dem Gehäuse 17 herausgedrückt werden.

Die Buchsen 18 sind ihrerseits auf einer Gewindespindel 20 frei verschiebbar gelagert, die als Hohlspindel ausgeführt ist und demzufolge an ihren Enden mit zwei gegenläufigen Gewindeabschnitten 20a und 20b ausgebildet ist. In diese Gewindeabschnitte 20a bzw. 20b ist jeweils eine Spindelmutter 21a bzw. 21b in der Art eines Schraubenbolzens eingeschraubt. Die Köpfe dieser Spindelmuttern 21a und 21b sind mit diagonalen Nuten 21c versehen, in die das jeweilige Ende der Primärbacke 2 bzw. Sekundärbacke 3 eingreift, wie aus Fig. 2 hervorgeht.

Auf diese Weise werden die Spindelmuttern 21a und 21b durch die Bremsbacken unverdrehbar gehalten, so daß eine Verdrehung der mit dem Nachstellrad 15 verbundenen Gewindespindel 20 eine Veränderung des Abstandes der Spindelmuttern 21a und 21b voneinander ergibt. Durch eine Betätigung des Nachstellhebels 11 ergibt sich eine Vergrößerung des Abstandes der Spindelmuttern 21a und 21b und demzufolge der an der Bremsbackenabstützung 7 angreifenden Enden von Primärbacke 2 und Sekundärbacke 3. Mit zunehmendem Bremsbelagverschleiß erfolgt somit eine Vergrößerung des Abstandes der sich an der Bremsbackenabstützung 7 abstützenden Enden der Bremsbacken mit Hilfe des in Abhängigkeit des Zuspannweges der Primärbacke 2 verschwenkten Nachstellhebels 11.

Um beide Bremsbacken in Lösestellung der Innenbackenbremse in eine mittige Ausgangsstellung zurückzuführen, ist die beim Ausführungsbeispiel durch die Spindelmuttern 21a und 21b sowie die Gewindespindel 20 gebildete Bremsbackenabstützung 7 in tangentialer Richtung verschiebbar im Gehäuse 17 gelagert. Die auf die Ringflansche 18a der beiden Buchsen 18 wirkende Druckfeder 19 bewirkt nach jedem Lösen der Innenbackenbremse eine Rückführung der Buchsen 18 in die in Fig. 2 dargestellte Ausgangsstellung. Die in Fig. 2 links eingezeichnete Buchse 18 nimmt hierbei durch ihre Anlage am Nachstellrad 15 die die beiden Spindelmuttern 21a und 21b aufnehmende Gewindespindel 20 nach links mit, wenn beim Bremsvorgang zuvor eine Verschiebung nach rechts stattgefunden hatte. Die in Fig. 2 rechts eingezeichnete Buchse 18 bewirkt eine entsprechende Mitnahme der Gewindespindel 20 nach rechts, wozu diese Buchse 18 über einen Zwischenring 22 an einem Federring 23 anliegt, der in eine Nut der Gewindespindel 20 eingesetzt ist und auf diese Weise als Anschlag für die Buchse 18 dient.

Die voranstehend beschriebene Konstruktion ergibt somit nicht nur auf einfache Weise selbsttätig eine Nachstellung der Bremsbackenabstützung 7 in Abhängigkeit vom auftretenden Verschleiß der Bremsbeläge 2b und 3b, sondern bewirkt darüber hinaus selbsttätig eine Mittenzentrierung von Primärbacke 2 und Sekundärbacke 3 in der Lösestellung der Innenbackenbremse.

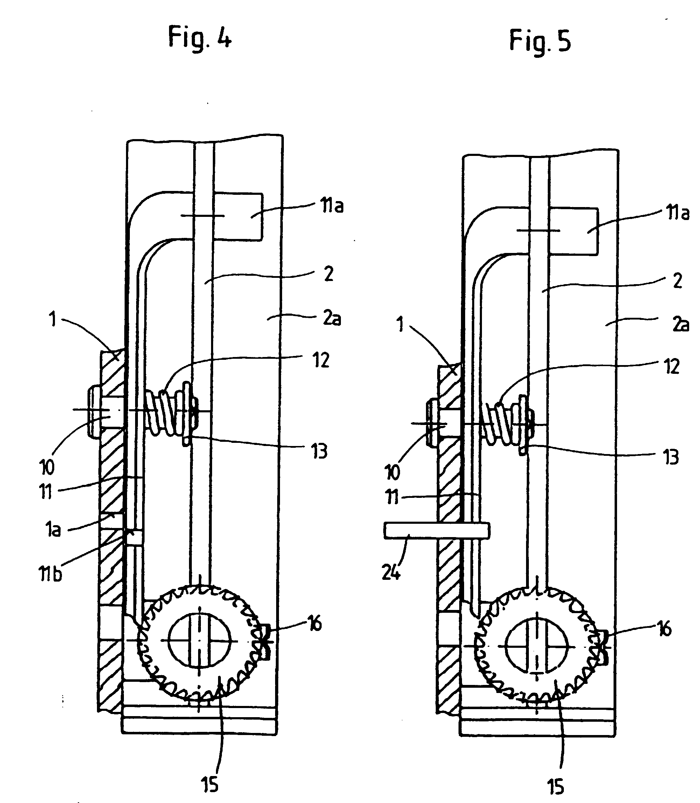

Um bei größerem Bremsbelagverschleiß die Innenbackenbremse einfacher demontieren zu können, zeigt Fig. 5 eine Möglichkeit, um die selbsttätig erfolgte Nachstellung der Bremsbackenabstützung 7 wieder rückgängig zu machen.

Zu diesem Zweck ist sowohl in der Bremsträgerplatte 1 als auch im Nachstellhebel 11 eine Bohrung 1a bzw. 11b ausgebildet (siehe Fig. 4) in die nach Zurückdrücken des Nachstellhebels 11 mittels eines Schraubendrehers ein Arretierstift 24 (siehe Fig. 5) einführbar ist. Dieser Arretierstift 24 hält den Nachstellhebel 11 entgegen der Kraft der Rückholfeder 14 zurück, so daß mit Hilfe eines Schraubendrehers das Nachstellrad 15 zurückgedreht werden kann, um den Abstand zwischen den Anlageflächen der Spindelmuttern 21a und 21b zu verringern. Hierdurch können die Bremsbacken 2 und 3 wieder in ihre ursprüngliche Ausgangsstellung zurückkehren, die sie bei unverschlissenem Bremsbelag eingenommen haben. In dieser Stellung ist die Innenbackenbremse ohne Schwierigkeiten demontierbar.

### Bezugszeichenliste

- 1: Bremsträgerplatte
- la: Bohrung
- 2: Primärbacke
- 2a: Bremsbelagträger
- 2b: Bremsbelag
- 2c: Ausschnitt
- 3: Sekundärbacke
- 3a: Bremsbelagträger
- 3b: Bremsbelag
- 4: Spreizvorrichtung
- 5: Federpaket
- 6: Stützbock
- 7: Bremsbackenabstützung
- 8: Lagerstück
- 9: Zugfeder
- 10: Lagerbolzen
- 11: Nachstellhebel
- 11a: Abwinklung
- 11b: Bohrung
- 12: Druckfeder
- 13: Lagerscheibe
- 14: Rückholfeder
- 15: Nachstellrad
- 16: Blattfeder
- 17: Gehäuse
- 18: Buchse
- 18a: Ringflansch
- 19: Druckfeder
- 20: Gewindespindel
- 20a: Gewindeabschnitt
- 20b: Gewindeabschnitt
- 21a: Spindelmutter
- 21b: Spindelmutter
- 21c: Nut
- 22: Zwischenring
- 23: Federring
- 24: Arretierstift

## Patentansprüche

1. Vorrichtung zum selbsttätigen Nachstellen der Bremsbacken (2, 3) einer Innenbackenbremse mit einer sich an einem Festpunkt einer Bremsträgerplatte (1) abstützenden und auf die Primärbacke (2) wirkenden Spreizvorrichtung, wobei die Primärbacke (2) mit der Sekundärbacke (3) über eine schwimmende Nachstelleinrichtung verbunden ist, deren Abstand zwischen ihren Anlageflächen (21c) an den Bremsbacken (2, 3) zum Ausgleich des Bremsbelagverschleisses vergrößerbar ist, indem der sich aufgrund des Bremsbelagverschleisses vergrößernde Zuspannweg der Primärbacke (2) als Antrieb zur Vergrößerung des Abstandes der Anlageflächen (21c) der Nachstelleinrichtung dient, wobei
der Rückhub der Primärbacke (2) über einen auf der Bremsträgerplatte (1) verschwenkbar gelagerten Nachstellhebel (11) auf ein Nachstellrad (15) übertragbar ist, das auf einer Gewindespindel (20) mit gegenläufigen Gewindeabschnitten (20a, 20b) angeordnet ist, die jeweils mit einer eine Anlagefläche für eine der Backen (2, 3) enthaltenden Spindelmutter (21a, 21b) zusammenwirken und jede Anlagefläche innerhalb einer am Ende jeweils einer Backe angreifenden Nut (21c) in der Spindelmutter (21a bzw. 21b) ausgebildet ist.

2. Vorrichtung nach Anspruch 1, dadurch gekennzeichnet, daß das Nachstellrad (15) als Klinkenrad ausgeführt ist, das jeweils bei Überschreiten der Klinkenteilung beim Rückhub der Primärbacke (2) durch den durch eine Rückholfeder (14) belasteten Nachstellhebel (11) um eine Teilung verdreht wird.

3. Vorrichtung nach Anspruch 1 oder 2, dadurch gekennzeichnet, daß der Nachstellhebel (11) durch einen in Bohrungen (1a, 11b) der Bremsträgerplatte (1) bzw. des Nachstellhebels (11) einsetzbaren Arretierstift (24) außer Eingriff mit dem Nachstellrad (15) feststellbar ist.

## Claims

1. Device for the automatic adjustment of the brake shoes (2, 3) of an inside shoe brake, having a spreading device which is supported on a fixed point of a brake anchor plate (1) and acts on the primary shoe (2), the primary shoe (2) being connected to the secondary shoe (3) via a floating adjusting device whose clearance between its bearing surfaces (21c) on the brake shoes (2, 3) can be increased in size to compensate for the brake-pad wear by the brake application stroke, which increases in size because of the brake-pad wear, of the primary shoe (2) serving as a drive for increasing the size of the clearance of the bearing surfaces (21c) of the adjusting device, the return stroke of the primary shoe (2) being able to be transmitted via an adjusting lever (11), which is mounted pivotably on the brake anchor plate (1), to an adjusting wheel (15) which is arranged on a threaded spindle (20) having opposed threaded sections (20a, 20b) which interact in each case with a spindle nut (21a, 21b) containing a bearing surface for one of the shoes (2, 3), and each bearing surface is formed within a groove (21c) in the spindle nut (21a and 21b), which groove engages at the end of one shoe in each case.

2. Device according to Claim 1, characterized in that the adjusting wheel (15) is designed as a ratchet wheel which, every time the ratchet spacing is exceeded during the return stroke of the primary shoe (2), is rotated by one spacing by means of the adjusting lever (11) stressed by a restoring spring (14).

3. Device according to Claim 1 or 2, characterized in that the adjusting lever (11) can be fixed in a manner disengaged from the adjusting wheel (15) by a locking pin (24) which can be inserted into bores (1a, 11b) in the brake anchor plate (1) and in the adjusting lever (11), respectively.

## Revendications

1. Dispositif de réglage automatique des mâchoires de frein (2, 3) d'un frein à mâchoires intérieures comportant un dispositif écarteur prenant appui contre un point fixe de plaque de support de frein (1) et agissant sur la mâchoire primaire (2), la mâchoire primaire (2) étant reliée à la mâchoire secondaire (3) par l'intermédiaire d'un mécanisme de réglage flottant dont l'écart entre les surfaces d'appui (21c) contre les mâchoires de frein (2, 3) peut être augmenté pour compenser l'usure des garnitures de frein en utilisant la course d'application de la mâchoire primaire (2), qui s'accroît du fait de l'usure de la garniture de frein, comme entraînement pour augmenter l'écart entre les surfaces d'appui (21c) du dispositif de réglage, la course de retour de la mâchoire primaire (2) pouvant être transmise, par l'intermédiaire d'un levier de réglage (11) monté sur la plaque de support de frein (1) de manière à pouvoir osciller, à une molette de réglage (15) qui est disposée sur une broche filetée (20) comportant des segments de filetage inverses (20a, 20b) qui se combinent chacun à un écrou à broche (21a, 21b) comprenant une surface d'appui destinée à l'une des mâchoires (2, 3) et chaque surface d'appui étant formée dans l'écrou à broche (respectivement 21a et 21b) à l'intérieur d'une rainure (21c) qui agit à chaque fois à l'extrémité d'une mâchoire.

2. Dispositif selon la revendication 1, caractérisé en ce que la molette de réglage (15) est réalisée sous forme de roue à cliquet qui, à chaque franchissement du pas de cliquet, est tournée d'un pas au moyen du levier de réglage (11) contraint par un ressort de rappel (14) pendant la course de retour de la mâchoire primaire (2).

3. Dispositif selon la revendication 1 ou 2, caractérisé en ce que le levier de réglage (11) peut être bloqué en position débrayée vis-à-vis de la molette de réglage (15) au moyen d'une cheville d'arrêt (24) que l'on peut insérer dans des trous forés (la, llb) ménagés respectivement dans la plaque de support de frein (1) et dans le levier de réglage (11).
